# EUROPÄISCHE PATENTSCHRIFT

(11) **EP 1 200 227 B1**
(45) Veröffentlichungstag und Bekanntmachung des Hinweises auf die Patenterteilung: **12.05.2004**
(21) Anmeldenummer: 00951403.5
(22) Anmeldetag: 19.07.2000
(51) Int. Cl.: B23K 37/047, B62D 65/00

(54) **FÜGEVERFAHREN UND FÜGESYSTEM**
JOINING METHOD AND A JOINT SYSTEM
PROCEDE ET SYSTEME D'ASSEMBLAGE

(30) Priorität: 31.07.1999 DE 29913407 U
(43) Veröffentlichungstag der Anmeldung: 02.05.2002
(73) Patentinhaber: KUKA Schweissanlagen GmbH, 86165 Augsburg (DE)
(72) Erfinder: GROSS, Oliver, 86672 Thierhaupten (DE); STEINHART, Wilhelm, 86316 Friedberg (DE); VOGT, Werner, 86169 Augsburg (DE)
(74) Vertreter: Ernicke, Hans-Dieter, Dipl.-Ing.
(86) Internationale Anmeldenummer: PCT/EP2000/006875
(87) Internationale Veröffentlichungsnummer: WO 2001/008844

(56) Entgegenhaltungen:
- DE-A- 4 018 592
- FR-A- 2 527 959
- FR-A- 2 578 464
- GB-A- 2 234 462
- US-A- 2 779 092

## Beschreibung

Die Erfindung betrifft ein Fügeverfahren und ein Fügesystem, welches aus einer Spanneinrichtung und einem mehrgliedrigen Karosserieteil, insbesondere einem Seitenwandgerippe gebildet ist mit den Merkmalen im Verfahrens- und Vorrichtungshauptanspruch.

Ein solches Fügeverfahren nebst Fügesystem mit Karosserieteilen und Spanneinrichtung sind aus der EP-B1 0 585 584 bekannt. Hierbei werden Karosserieteile, bestehend aus zwei Seitenwandgruppen und einer Bodengruppe gefügt und durch Schweißpunkte geheftet. Diese Technik betrifft konventionelle selbsttragende Karosserien aus Blech, bei denen die Seitenwandgruppen in Y-Richtung und damit quer an die Bodengruppe gefügt und geschweißt werden. Hierfür wird eine Spanneinrichtung mit mehreren, entsprechend dieser Kinematik angeordneten und beweglichen Spannrahmen verwendet. An den Spannrahmen sind mehrere verteilte Spanneinheiten starr angeordnet. Bei dieser Technik sind die aus mehreren, miteinander verbundenen Elementen bestehenden und vorgefertigten Karosserieteile in sich weitgehend stabil und werden jeweils in einem Fügeschritt zusammen gebracht. Diese bekannt Technik ist für neuere Karosseriekonstruktionen, die z.B. als Gitterrahmen oder als sogenannter Spaceframe ausgebildet sind, nicht ohne weiteres tauglich. Hier kann es zu Problemen durch summierte Toleranzketten kommen.

Ein solcher Spaceframe ist z.B. aus der DE-A-40 18 592 bekannt. Hier werden die Karosseriebauteile, welche hier aus einer Dachgruppe und einer vorgefertigten Bodengruppe bestehen, in Z-Richtung gefügt.

Die FR 2 527 959 zeigt ein Fügeverfahren und ein Fügesystem mit Fahrzeugkarosserieteilen ähnlich wie der vorgenannte Stand der Technik. Auch hier besteht die Spanneinrichtung aus Spannrahmen mit starr angeordneten Spanneinheiten. Die Spannrahmen sind bei dieser Ausführungsform schwenkbar.ausgebildet und können aus der Schweißposition in eine Übernahmeposition nach außen geschwenkt werden, in der sie von einer Zuführeinrichtung mit Bauteilen einer Seitenwandgruppe bestückt werden. An den Spannrahmen sind Schweißvorrichtungen angeordnet, die die einzeln zugeführten Bauteile schweißen und zu Baugruppen verbinden. Die komplettierte Seitenwand kann dann durch eine Schwenkbewegung in die Fügeposition zu einer Boden- und Dachgruppe gebracht werden. Andere Schweißvorrichtungen am Spannrahmen übernehmen dann das Verschweißen dieser Baugruppen.

Ein ähnliches konventionelles Fügeverfahren und Fügesystem zeigen auch die GB-A-2 234 462, die FR-A-2 578 464 und die US-A-2,779,092.

Es ist daher Aufgabe der vorliegenden Erfindung, eine bessere Spann- und Fügemöglichkeit aufzuzeigen.

Die Erfindung löst diese Aufgabe mit den Merkmalen in den selbstständigen Ansprüchen.
Das erfindungsgemäße mehrstufige Fügeverfahren, die Spanneinrichtung und die Karosserieteile, insbesondere das Seitenwandgerippe sowie das daraus gebildete Fügesystem bieten eine sehr hohe Fügegenauigkeit für moderne Gitterrahmen und auch andere Arten von Fahrzeugkarosserien. Lange Toleranzketten werden vermieden. Außerdem werden die geometrischen Möglichkeiten eines Gitterrahmens optimal für die Fügetechnik ausgenutzt. Zudem sind hochexakte Positionierungen des Spannrahmens möglich.

Darüber hinaus ergibt sich als Vorteil, dass die Breitentoleranz der Bodengruppe bzw. des Unterbodens auf die Lage der Seitenwand oder des Oberbaus in y-Richtung keinen Einfluss mehr hat. Ferner ist es möglich, Gerippegruppen oder Module außerhalb der Linie zu fertigen. Hierbei ist es ferner möglich, zwei Seitenwandgruppen mit Querträgern im Dach- und Windschutzscheibenbereich sowie einer Hutablage zu einem käfigartigen Gehäuse zusammenzusetzen und dieses als Ganzes auf der Bodengruppe zu fügen. Bei der erfindungsgemäßen Fügetechnik ergibt sich zudem eine besonders gute Zugänglichkeit und optimale Lage der Fügestellen, insbesondere wenn diese in Form von Schweißnähten, Klebestellen, formschlüssigen Schnappverbindungen oder dgl. vorliegen. Dies äußert sich ferner in einer guten Schweißbarkeit.

Die erfindungsgemäße Gestaltung der Spanneinrichtung mit den Ausgleichseinheiten und deren zusätzlicher Beweglichkeit bietet einen Toleranzausgleich durch Positionierung und gegebenenfalls Verformung der gespannten Bauteile. Dies ist besonders günstig, wenn entsprechend der Erfindung die Seitenwandgruppe in z-Richtung in die Bodengruppe gefügt wird. Zur Optimierung der Fügetechnik werden dazu die Karosserieteile und insbesondere die Seitenwandgerippe entsprechend umgestaltet, so dass sie einheitliche Fügeschnittstellen in Fügerichtung und vorzugsweise in z-Richtung haben und eine Aufsetz-Fügebewegung erlauben.

In Verbindung mit der vorerwähnten gehäuseförmigen Gerippegruppe ist es außerdem günstig, wenn am Spannrahmen für diese Gruppe mindestens ein Rahmenteil oder eine externe Ausgleichseinheit beweglich und angetrieben ist. Hierdurch läßt sich ein Toleranzausgleich in z-Richtung für die Seitenwandgerippe links und rechts erreichen. Dies ist insbesondere in Verbindung mit der B-Säule günstig.

Weitere vorteilhafte Ausgestaltungen ergeben sich aus den Unteransprüchen.

Die Erfindung ist in den Zeichnungen beispielsweise und schematisch dargestellt. Im einzelnen zeigen
- Figur 1: eine Fahrzeugkarosserie in Form eines Gitterrahmens mit Fügeschnittstellen in z-Richtung in Seitenansicht,
- Figur 2: die Seitenwandgruppe der Karosserie von Figur 1 mit mehreren Spann- und Ausgleichseinheiten,
- Figur 3: ein Fügesystem mit der Seitenwandgruppe von Figur 2 und einer Spanneinrichtung mit Spannrahmen,
- Figur 4: eine Variante zu Figur 3 mit Zusatzteilen im Unterbodenbereich und
- Figur 5 .: eine Variante des Seitenwandgerippes von Figur 1 mit einer anderen Ausbildung und einer anderen Fügeschnittstelle der A-Säule.

In den Zeichnungen ist ein Fügesystem (1) dargestellt, das aus einer Spanneinrichtung (15) und einer Fahrzeugkarosserie (2) besteht. Die Fahrzeugkarosserie (2) ist z.B. als Gitterrahmen oder sog. Knoten-Träger-Rahmen ausgebildet, der auch als Spaceframe bezeichnet wird. Sie besteht aus mehreren Karosserieteilen (3,12,13), die zum Teil oder vollständig auch als vorgefertigte Baugruppen ausgebildet sein können. In den Zeichnungen sind die Karosserieteile (3,12,13) durch strichpunktierte Linien verdeutlicht.

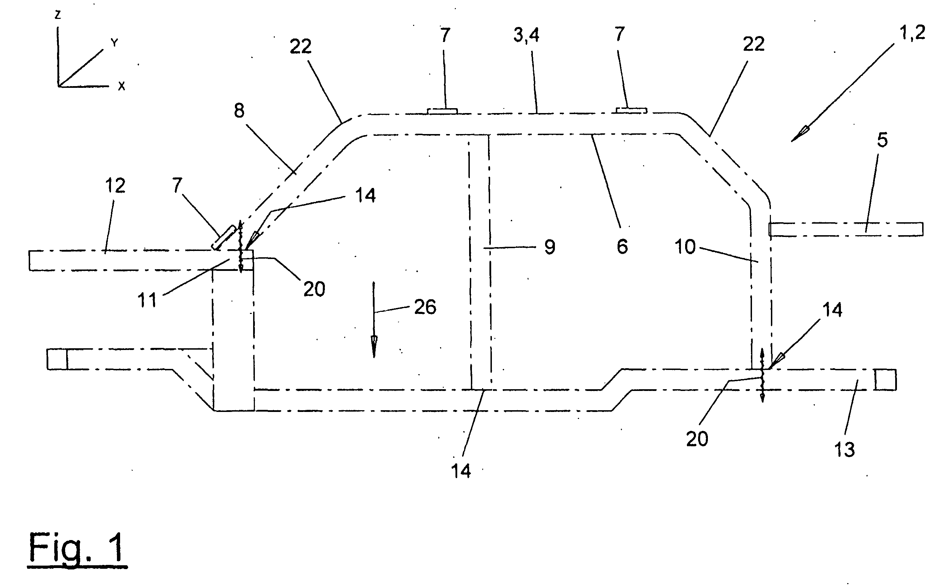

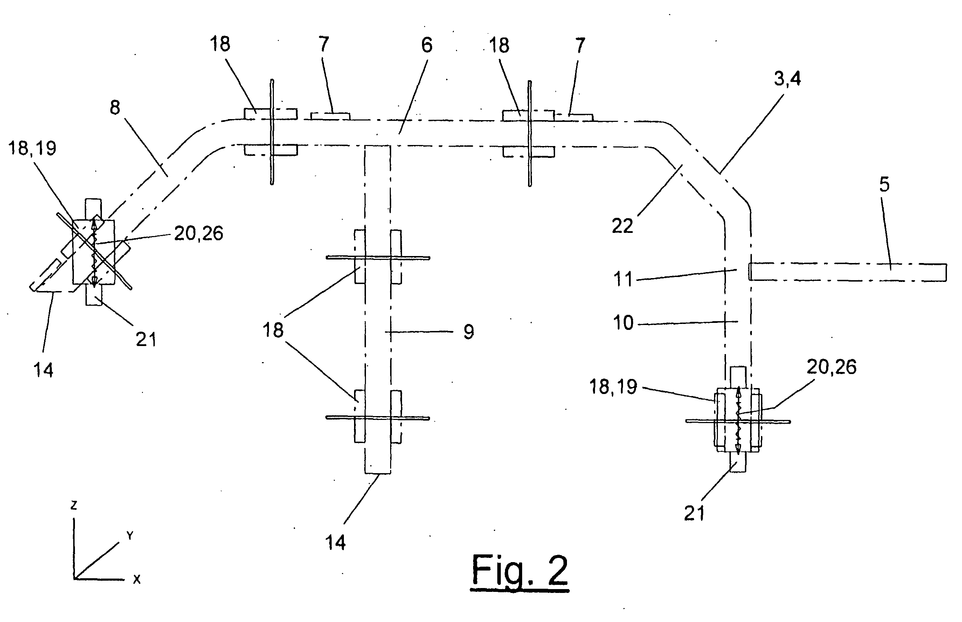

Das eine Karosserieteil (3), welches den Oberbau oder Aufbau bildet, ist vorzugsweise als Gerippegruppe ausgebildet. In Figur 1 und 2 ist hiervon ein Seitenwandgerippe (4) schematisch dargestellt.

Das Seitenwandgerippe (4) und die Gerippegruppe (3) bestehen aus mehreren bereits miteinander verbundenen Elementen (5,6,7,8,9,10). Dies sind bei dem Seitenwandgerippe (4) in der gezeigten Ausführungsform drei vertikale oder schräge Säulen, A-Säule (8), B-Säule (9) und C-Säule (10), die untereinander durch Längsträger (6) und gegebenenfalls Knoten (11) verbunden sind. An der C-Säule (10) ist außerdem eine Hutablage (5) über einen Knoten (11) befestigt.

Die beiden Seitenwandgerippe (4) können über zwei Querträger (7) im Dachbereich und einen Querträger (7) im Bereich der Windschutzscheibe sowie über die Hutablage (5) zu einem käfigartigen Gehäuse verbunden sein. Das käfigartige Gehäuse bildet die vorerwähnte Gerippegruppe (3). Die Verbindung der einzelnen Träger kann wiederum über Knoten (11) gegeben sein. An den Knoten (11) können die Verbindungen über Schweißnähte, Klebestellen formschlüssige Schnappverbindungen oder in sonstiger geeigneter Weise geschaffen sein.

Die in Figur 1, 4 und 5 dargestellte Karosserie (2) kann ferner im Endausbau weitere Karosserieteile, insbesondere eine Motorraumgruppe (12) und eine Bodengruppe (13) beinhalten. Diese beiden Karosserieteile (12,13) können vorab gefügt sein. Desgleichen sind auch die vorbeschriebenen Seitenwandgerippe (4) bzw. die käfigförmige Gerippegruppe (3) vorab außerhalb der Transferlinie (nicht dargestellt) aufgebaut und gefügt worden.

Das Fügen der Seitenwandgerippe (4) bzw. der Gerippegruppe (3) an der Bodengruppe (13) und.gegebenenfalls an der Motorgruppe (12) erfolgt über Fügeschnittstellen (14), die bei der gezeigten Ausführungsform in Z-Richtung ausgerichtet sind. Die Fügeschnittstellen (14) haben dabei quer zur z-Richtung verlaufende Kontakt- und Verbindungsflächen in der XY-Ebene. Die Fügerichtung (26) ist in Z-Richtung, so dass die Seitenwandgerippe (4) bzw. die Gerippegruppe (3) bei horizontaler Lage der Bodengruppe (13) und der Motorraumgruppe (12) in einer Fügerichtung (26) vertikal von oben auf diese Teile (12,13) aufgesetzt und gefügt werden. Die Fügeschnittstellen (14) befinden sich an den unteren Enden der A-, B- und C-Säule (8,9,10).

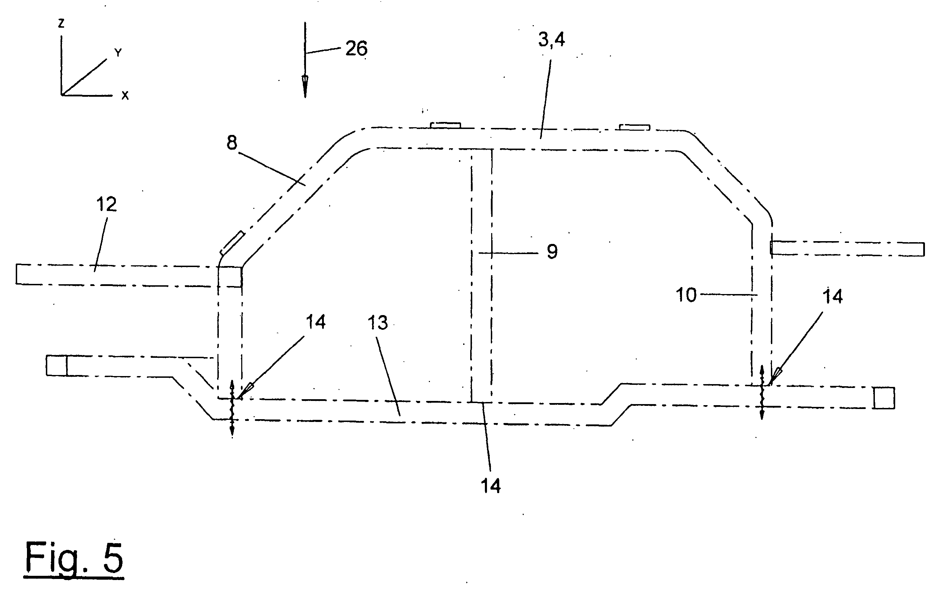

Beim Ausführungsbeispiel von Figur 1 ist die A-Säule (8) geteilt, wobei sich der obere Säulenbereich mit seiner Fügeschnittstelle (14) auf der Motorraumgruppe (12) abstützt. Der untere Säulenbereich wird von dem vertikalen Träger der Motorraumgruppe (12) gebildet. In der Variante von Figur 5 ist die A-Säule (8) verlängert und abgewinkelt. Sie stützt sich mit ihrer Fügeschnittstelle (14) auf der Bodengruppe (13) ab. Die Motorraumgruppe (12) ist hier auf andere Weise mit der Bodengruppe (13) verbunden, wobei auch Teile der Motorraumgruppe (12) über einen Knoten (11) mit den A-Säulen (8) verbunden sein können.

Das Fügen der Karosserieteile (3,12,13) erfolgt in mindestens zwei Fügeschritten und mit getrennten Fügebewegungen. Beim Fügen der Seitenwandgerippe (4) bzw. der Gerippegruppe (3) ist dabei zur Kompensation der statischen Überbestimmungen ein Toleranzausgleich in Z-Richtung möglich.

In der bevorzugten Ausführungsform werden beim ersten Fügeschritt zunächst die mittleren B-Säulen (9) zur Positionsbestimmung verwendet und mit ihren Fügeschnittstellen (14) in Fügerichtung (26) bzw. in Erstreckungsrichtung der Z-Achse auf die Bodengruppe (13) aufgesetzt und dort fest gehalten. Hierbei kann gegebenenfalls ein gegenseitiger formschlüssiger Eingriff der Teile (9,13) oder eine andere Art von Führung und/oder Fixierung vorhanden sein.

Bei den einzelnen Seitenwandgerippen (4) erfolgt der Toleranzausgleich dann an den Fügeschnittstellen (14) der A-Säule (8) und der C-Säule (10). Hierbei können beide Säulen (8,10) vor oder beim ersten Fügeschritt zunächst außer Fügekontakt mit der Bodengruppe (13) gehalten, wobei sie vorzugsweise entgegen der Fügerichtung (26) nach oben gebogen und gespreizt werden, was durch eine biegegünstige Gestaltung und eine Ausgleichsform (22) im oberen Säulenbereich und an den Übergängen zu den Längsträgern (6) begünstigt wird.

Nach der Positionierung der B-Säulen (9) werden dann in einem zweiten oder eventell auch weiteren folgenden Fügeschritten die A-Säule (8) und die C-Säule (10) in z-Richtung nach unten bewegt und in Fügekontakt mit der Bodengruppe (13) bzw. der Motorraumgruppe (12) gebracht. Etwaige Toleranzen, z.B. Ober- oder Unterlängen, werden durch eine geringfügige Verformung der Säulen (8,10) ausgeglichen. An den Fügeschnittstellen (14) kann dann in geeigneter Weise eine Verbindung der Karosserieteile durch Schweißen, Kleben oder dergleichen erfolgen. An den Fügeschnittstellen (14) können außerdem Knoten gebildet werden bzw. vorhanden sein.

Zusätzlich kann auch bei einer vorgefügten käfigförmigen Gerippegruppe (3) ein Toleranzausgleich an den B-Säulen (9) in Z-Richtung erfolgen. Hierbei wird die Gerippegruppe (3) zunächst mit der einen längeren B-Säule (9) im ersten Fügeschritt in Kontakt mit der Bodengruppe (13) gebracht und im folgenden Fügeschritt die andere kürzere B-Säule (9) dann über den Toleranzausgleich an der Fügeschnittstelle (14) nachgeführt.

Zum Fügen der Karosserieteile und für den Toleranzausgleich ist die Spanneinrichtung (15) vorgesehen. Sie besteht aus mindestens einem Spannrahmen (17) der die Seitenwandgerippe (4) und gegebenenfalls die Dachteile bzw. die vorgefügte Gerippegruppe (3) spannt. Hierbei kann es sich um einen käfigartigen Kombirahmen handeln, der die Gerippegruppe (3) als Ganzes spannt. Der oder die Spannrahmen (17) haben starre Rahmenteile (23,24), die horizontal und vertikal sowie gegebenenfalls auch schräg ausgerichtet sein können. Zusätzlich können ein oder mehrere bewegliche Rahmenteile (25) vorhanden sein, die in Fügerichtung (26), insbesondere in z-Richtung, beweglich gelagert und angetrieben sind.

Der oder die Spannrahmen (17) werden im ersten Fügeschritt auf einer Unterbodenpalette (16) für die Bodenbaugruppe (13) in Fügerichtung (26) bzw. in Z-Richtung über ihre vertikalen Träger (24) aufgesetzt und angedockt.
Alternativ ist auch ein Abstecken an einer stationären Referenz möglich. Diese Verbindung führt zu einer exakten Positionierung der Spanneinrichtung (15).

Der oder die Spannrahmen (17) verfügen über mehrere Spanneinheiten (18), die die verschiedenen Säulen und Träger der Seitenwandgerippe (4) bzw. der Gerippegruppe (3) spannen. Diese Spanneinrichtungen (18) können in beliebig geeigneter Weise ausgebildet und mit dem oder den Spannrahmen (17) verbunden sein.

Zur Erzielung des Toleranzausgleichs sind einige der Spanneinheiten (18) als bewegliche Ausgleichseinheiten (19) angeordnet, die um mindestens eine rotatorische und/oder lineare Stellachse (20) beweglich sind und die die gespannten Karosserieteile entsprechend bewegen können. Die Stellachsen (20) bieten mindestens eine Verstellmöglichkeit in Fügerichtung (26) bzw. z-Richtung. In der bevorzugten Ausführungsform hat jede Ausgleichseinheit (19) eine einzelne lineare Stellachse (20), die sich vorzugsweise in Fügerichtung (26) bzw. in z-Richtung erstreckt oder zumindest eine solche Richtungskomponente hat.

Der zweite und eventuelle weitere Fügeschritte werden durch die Spanneinheiten (18) bzw. Ausgleichseinheiten (19) ausgeführt. Durch die Ausgleichseinheiten (19) kann auch die Verformung der A- und C-Säulen (8,10) beim ersten Fügeschritt bewirkt werden.

Die beweglichen und angetriebenen Ausgleichseinheiten (19) können in beliebig geeigneter Weise ausgebildet sein. Sie bestehen aus geeigneten Spannelementen für die gespannten Karosserieteile und einem Antrieb (21), der eine Bewegung dieser Spannelemente gegenüber dem Spannrahmen (17) in Richtung der Stellachse (20) ermöglicht. Der Antrieb (21) kann in beliebig geeigneter Weise ausgebildet sein, z.B. als Pneumatikzylinder, elektrischer Spindelantrieb oder dergleichen.

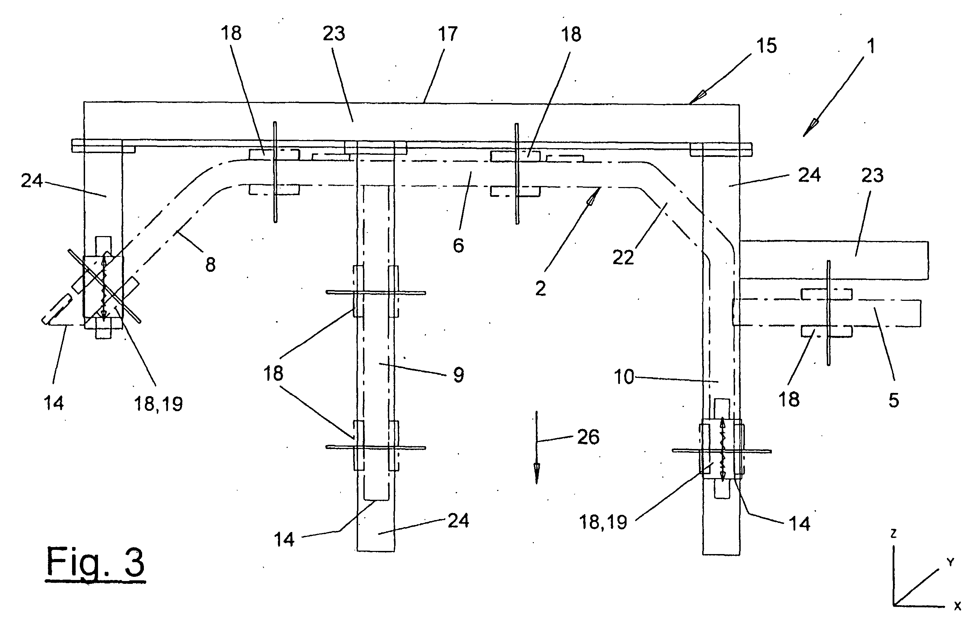

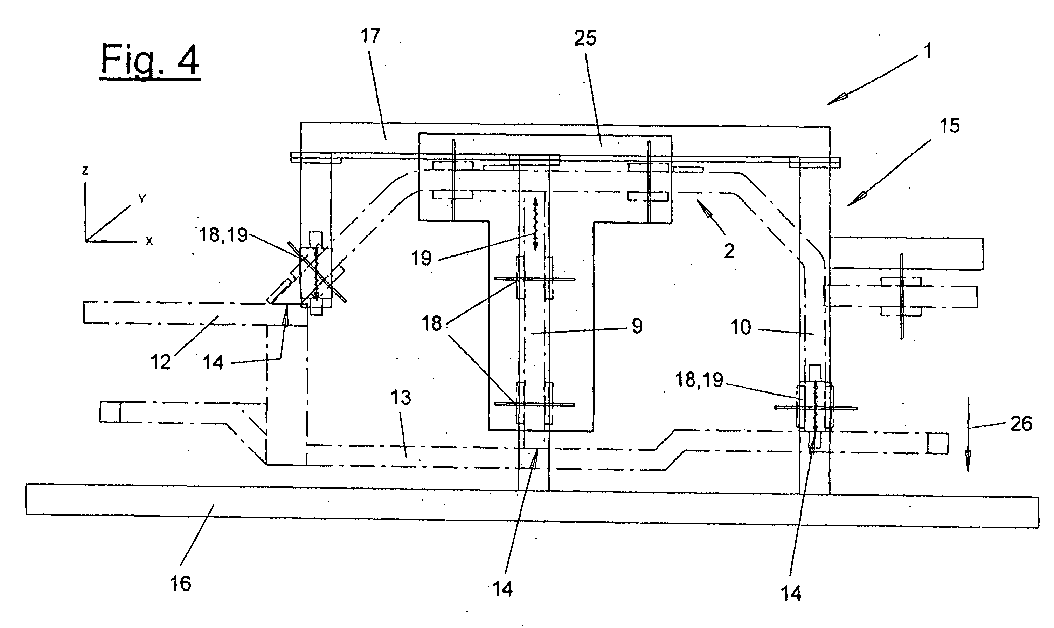

Die beweglichen Ausgleichseinheiten (19) sind vorzugsweise an den im wesentlichen vertikalen Säulen (8,10) angeordnet und befinden sich ebenfalls bevorzugt an deren unterem freien Ende in der Nähe der Fügeschnittstellen (14). Figur 2 verdeutlicht die Anordnung der Ausgleichseinheiten (19) am Seitenwandgerippe (4). Figur 3 und 4 zeigen die Zuordnung zum Spannrahmen (17).

Der Spannrahmen (17) in Figur 3 ist als im wesentlichen starrer Rahmen für ein einzelnes Seitenwandgerippe (4) ausgebildet. Bei dieser Ausgestaltung befinden sich zwei solche Spannrahmen (17) in der Bearbeitungsstation (nicht dargestellt) und sind einzeln über geeignete Förder- und Stellvorrichtungen (nicht dargestellt) zumindest in Z-Richtung beweglich. Zusätzlich können Beweglichkeiten in X- und Y-Richtung vorhanden sein.

In Figur 4 ist ein käfigartiger Spannrahmen (17) dargestellt, der die vorgefügte Gerippegruppe (3) spannt. Dieser Spannrahmen (17) hat ein oder zwei in z-Richung bewegliche Rahmenteile (25), deren Spanneinheiten (18) die mittlere B-Säule (9) und den Längsträger (6) in der Nachbarschaft spannen. Das bewegliche Rahmenteil (25) dient ebenfalls als bewegliche Ausgleichseinheit (19) und sorgt für den eingangs beschriebenen Toleranzausgleich zwischen den beiden B-Säulen (9).

Abwandlungen der gezeigten Ausführungsform sind in verschiedener Weise möglich. Die Spanneinrichtung (15) kann zusätzlich oder alternativ einen Toleranzausgleich mit beweglichen Ausgleichseinheiten (19) bzw. beweglichen Rahmenteilen (25) auch in beliebig anderen Richtungen, insbesondere der X- und Y-Richtung bieten. Die Fahrzeugkarosserie (2) hat dazu entsprechend anders ausgerichtete Fügeschnittstellen. Insbesondere läßt sich die Spanneinheit (15) dann auch zum Fügen der bisher üblichen Karosserieformen in Y-Richtung einsetzen. Die Ausgleichseinheiten (19) sind entsprechend anders angeordnet und orientiert.

Bei der bevorzugten und beschriebenen Karosserieform erfolgt ein Fügen der vorgefertigten Baugruppen nur in z-Richtung. Alternativ kann dies auch nur teilweise in z-Richtung geschehen, wobei die schräge Fügebewegung, Stellachse und Schnittstelle nur eine Richtungskomponente in z-Richtung haben. Ferner läßt sich dies noch weiter für ein Fügen in anderen Richtungen, z. B. X- und Y-Richtung, entsprechend abwandeln und umgestalten.

Im Rahmen der Erfindung sind verschiedene Varianten möglich. Zum einen können auch andere Karosserieteile als die vorstehend beschriebenen mit dem mehrstufigen Fügeverfahren und dem Fügesystem (1) gefügt werden. Ferner ist es auch möglich, dass die Karosserieteile aus Elementen in einer anderen Ausgestaltung und anderer Zahl bestehen. Ferner kann die Verformung der am ersten Fügeschritt noch nicht beteiligten Elemente (8,10) der Karosserieteile (3,12,13) statt durch die Spanneinheit (18) bzw. die bewegliche Ausgleicheinheit (19) auch auf andere Weise, z. E. durch Anlage an einem ortsfesten Anschlag bei der Zustellung des Spannrahmens (17) geschehen. Ferner ist es möglich, diese erst später zu verübenden Elemente (8,10) statt durch Verformung auch auf andere Weise zunächst außer Fügekontakt zu bringen.

Variabel sind ferner die konstruktive Ausgestaltung der Spanneinrichtung (15) und ihrer Teile. Die beweglichen Ausgleichseinheiten (19) können anders ausgebildet und angeordnet sein. Sie können insbesondere auch extern und getrennt von den Spannrahmen (17) angeordnet sein, indem sie als separate bewegliche Greifer, z.B. als Robotergreifer oder verfahrbare bzw. schwenkbare Spanner, ausgebildet sind.

### BEZUGSZEICHENLISTE

- 1: Fügesystem
- 2: Karosserie, Gitterrahmen
- 3: Karosserieteil, Gerippegruppe
- 4: Seitenwandgerippe
- 5: Element, Hutablage, Querträger
- 6: Element, Längsträger
- 7: Element, Querträger, Dach, Windschutzscheibe
- 8: Element, A-Säule
- 9: Element, B-Säule
- 10: Element, C-Säule
- 11: Knoten
- 12: Karosserieteil, Motorraumgruppe
- 13: Karosserieteil, Bodengruppe
- 14: Fügeschnittstelle
- 15: Spanneinrichtung
- 16: Unterbodenpalette
- 17: Spannrahmen, Kombirahmen Dach und Seitenwand
- 18: Spanneinheit
- 19: bewegliche Ausgleichseinheit
- 20: Stellachse
- 21: Antrieb
- 22: Ausgleichsform
- 23: Rahmenteil horizontal
- 24: Rahmenteil vertikal
- 25: Rahmenteil beweglich
- 26: Fügerichtung

## Patentansprüche

1. Verfahren zum Fügen von Teilen (3,12,13) einer Fahrzeugkarosserie (2) mittels einer Spanneinrichtung (15), wobei zumindest ein Karosserieteil (3) als Baugruppe aus mehreren bereits miteinander verbundenen Elementen (5,6,7,8,9,10) ausgebildet ist, **dadurch gekennzeichnet, dass** das Fügen der Karosserieteile in mehreren Fügeschritten erfolgt, wobei im ersten Schritt zunächst mindestens ein Element (9) des einen Karosserieteils (3) an Fügeschnittstellen (14) des anderen Karosserieteils (12,13) in mindestens einer Fügerichtung (26) positioniert wird, wobei die anderen verbundenen Elemente (5,6,7,8,10) mit ihren Fügeschnittstellen (14) zunächst außer Fügekontakt gehalten werden und erst nach dieser Positionierung in mindestens einem weiteren Fügeschritt durch eine zusätzliche Bewegung in der oder den Fügerichtung(en) (26) unter Aufnahme der Toleranzen in Fügekontakt mit dem anderen Karosserieteil (12,13) gebracht werden.

2. Verfahren nach Anspruch 1, **dadurch gekennzeichnet, dass** die anderen verbundenen Elemente (9,10) beim ersten Fügeschritt durch Verformung entgegen der Fügerichtung (26) außer Fügekontakt gehalten werden.

3. Verfahren nach Anspruch 1 oder 2, **dadurch gekennzeichnet, dass** die Fügebewegung der Karosserieteile (3,12,13) beim ersten Fügeschritt durch eine Zustellbewegung eines Spannrahmens (17) der Spanneinrichtung (15) erfolgt, wobei die Verformung und die Fügebewegung beim zweiten Fügeschritt durch eine Zusatzbewegung von ein oder mehreren ausgleichenden und angetriebenen Spanneinheiten (18) innerhalb des Spannrahmens (17) in einer der Fügerichtung (26) entsprechenden Stellachse (20) erfolgt.

4. Verfahren nach Anspruch 1, 2 oder 3, **dadurch gekennzeichnet, dass** die Fügebewegungen der Karosserieteile (3,12,13) zumindest mit einer Richtungskomponente in Richtung der z-Achse erfolgen.

5. Fügesystem zum Fügen von Teilen (3,12,13) einer Fahrzeugkarosserie (2) mittels einer Spanneinrichtung (15), wobei zumindest ein Karosserieteil (3) als Baugruppe aus mehreren bereits miteinander verbundenen Elementen (5,6,7,8,9,10) ausgebildet ist und die Spanneinrichtung (15) ein oder mehreren Spannrahmen (17) mit Spanneinheiten (18) aufweist, welche die Karosserieteile (3) spannen, **dadurch gekennzeichnet, dass** ein oder mehrere Spanneinheiten (18) als bewegliche und angetriebene Ausgleichseinheiten (19) für eine zusätzliche Bewegung der gespannten Karosserieteile (3) in mindestens einer Stellachse (20) ausgebildet sind.

6. Fügesystem nach Anspruch 5, **dadurch gekennzeichnet, dass** die linearen Stellachsen (20) der Ausgleichseinheiten (19) gemeinsam in einer Richtung ausgerichtet sind.

7. Fügesystem nach Anspruch 5 oder 6, **dadurch gekennzeichnet, dass** die Stellachsen (20) gemeinsam zumindest mit einer Richtungskomponente in Richtung der Fügerichtung (26), vorzugsweise in Richtung der z-Achse, ausgerichtet sind.

8. Fügesystem nach Anspruch 5, 6 oder 7, **dadurch gekennzeichnet, dass** die Ausgleichseinheiten (19) vertikalen Säulen (8,9,10) der Karosserie (3) zugeordnet sind.

9. Fügesystem nach einem der Ansprüche 5 bis 8, **dadurch gekennzeichnet, dass** die Ausgleichseinheiten (19) in der Nähe von Fügeschnittstellen (14) der Karosserie (3) angeordnet sind.

10. Fügesystem nach einem der Ansprüche 5 bis 9, **dadurch gekennzeichnet, dass** die Ausgleichseinheiten (19) im Bereich des freien Endes der vertikalen Säulen (8,9,10) angeordnet sind.

11. Fügesystem nach einem der Ansprüche 5 bis 10, **dadurch gekennzeichnet, dass** der Spannrahmen (17) starre Rahmenteile (23,24) und ein oder mehrere relativ dazu bewegliche Rahmenteile (25) aufweist.

12. Fügesystem nach einem der Ansprüche 5 bis 11 mit einem Seitenwandgerippe (4) einer Fahrzeugkarosserie (2), bestehend aus mehreren vertikalen Säulen (8,9,10) und Längsträgern (6) mit Fügeschnittstellen (14) zur Fügeverbindung mit einer Bodengruppe (13), **dadurch gekennzeichnet, dass** die Fügeschnittstellen (14) zumindest mit einer. Richtungskomponente in z-Richtung ausgerichtet sind für eine Aufsetz-Fügebewegung.

13. Fügesystem nach Anspruch 12, **dadurch gekennzeichnet, dass** die A-Säule (8) geteilt ist, wobei das Unterteil von einer Motorraumgruppe (12) gebildet ist.

14. Fügesystem nach Anspruch 12 oder 13, **dadurch gekennzeichnet, dass** zumindest eine vertikalen Säule (8,9,10) am oberen Ende eine biegbare Ausgleichsform (22) aufweist.

15. Fügesystem nach Anspruch 12, 13 oder 14, **dadurch gekennzeichnet, dass** die beiden Seitenwandgerippe (4) mit Querträgern (5,7) zu einem Gehäuse mit Fügeschnittstellen (14) in z-Richtung verbunden sind.

## Claims

1. Method for joining parts (3, 12, 13) of a vehicle body (2) by means of a clamping device (15), at least one body part (3) being designed as a subassembly of a plurality of elements (5, 6, 7, 8, 9, 10) which are already connected to one another, **characterized in that** the joining of the body parts takes place in a number of joining steps, in which, in the first step, first of all at least one element (9) of the one body part (3) is positioned in at least one joining direction (26) on joining interfaces (14) of the other body part (12, 13), the other connected elements (5, 6, 7, 8, 10) first of all being held with their joining interfaces (14) out of joining contact and only after this positioning being brought, in at least one further joining step, by means of an additional movement in the joining direction or joining directions (26) into joining contact with the other body part (12, 13) with the tolerances being absorbed.

2. Method according to Claim 1, **characterized in that** the other connected elements (9, 10) are held out of joining contact during the first joining step by being deformed counter to the joining direction (26).

3. Method according to Claim 1 or 2, **characterized in that** the joining movement of the body parts (3, 12, 13) during the first joining step takes place by means of an adjusting movement of a clamping frame (17) of the clamping device (15), the deformation and the joining movement during the second joining step taking place by means of an additional movement of one or more compensating and driven clamping units (18) within the clamping frame (17) in an axis of adjustment (20) corresponding to the joining direction (26).

4. Method according to Claim 1, 2 or 3, **characterized in that** the joining movements of the body parts (3, 12, 13) take place, at least with one direction component, in the direction of the z axis.

5. Joining system for joining parts (3, 12, 13) of a vehicle body (2) by means of a clamping device (15), at least one body part (3) being designed as a subassembly of a plurality of elements (5, 6, 7, 8, 9, 10) which are already connected to one another, and the clamping device (15) having one or more clamping frames (17) with clamping units (18) which clamp the body parts (3), **characterized in that** one or more clamping units (18) are designed as moveable and driven compensating units (19) for an additional movement of the clamped body parts (3) in at least one axis of adjustment (20).

6. Joining system according to Claim 5, **characterized in that** the linear axes of adjustment (20) of the compensating units (19) are jointly aligned in one direction.

7. Joining system according to Claim 5 or 6, **characterized in that** the axes of adjustment (20) are jointly aligned, at least with one direction component, in the direction of the joining direction (26), preferably in the direction of the z axis.

8. Joining system according to Claim 5, 6 or 7, **characterized in that** the compensating units (19) are assigned to vertical pillars (8, 9, 10) of the body (3).

9. Joining system according to one of Claims 5 to 8, **characterized in that** the compensating units (19) are arranged in the vicinity of joining interfaces (14) of the body (3).

10. Joining system according to one of Claims 5 to 9, **characterized in that** the compensating units (19) are arranged in the region of the free end of the vertical pillars (8, 9, 10).

11. Joining system according to one of Claims 5 to 10, **characterized in that** the clamping frame (17) has rigid frame parts (23, 24) and one or more frame parts (25) which can be moved relative thereto.

12. Joining system according to one of Claims 5 to 11 with a side wall carcass (4) of a vehicle body (2) comprising a plurality of vertical pillars (8, 9, 10) and longitudinal members (6) having joining interfaces (14) for the joining connection to a floor assembly (13), **characterized in that** the joining interfaces (14) are aligned, at least with one direction component, in the z direction for a set-down joining movement.

13. Joining system according to Claim 12, **characterized in that** the A-pillar (8) is divided, the lower part being formed by an engine-compartment assembly (12).

14. Joining system according to Claim 12 or 13, **characterized in that** at least one vertical pillar (8, 9, 10) has a flexible compensating shape (22) at the upper end.

15. Joining system according to Claim 12, 13 or 14, **characterized in that** the two side wall carcasses (4) are connected to crossmembers (5, 7) to form a housing having joining interfaces (14) in the z direction.

## Revendications

1. Procédé pour l'assemblage de pièces (3, 12, 13) d'une carrosserie de véhicule (2) au moyen d'un dispositif de serrage (15), dans lequel au moins une pièce de carrosserie (3) forme un module de construction composé de plusieurs éléments déjà assemblés les uns aux autres (5, 6, 7, 8, 9, 10), **caractérisé en ce que** l'assemblage des pièces de carrosserie est effectué en plusieurs étapes d'assemblage, dans lequel on positionne d'abord, au cours d'une première étape, au moins un élément (9) d'une première pièce de carrosserie (3) sur des zones d'assemblage (14) de l'autre pièce de carrosserie (12, 13) dans au moins une direction d'assemblage (26), dans lequel on maintient les autres éléments assemblés (5, 6, 7, 8, 10) avec leurs zones d'assemblage (14) d'abord hors de contact d'assemblage et on ne les met en contact d'assemblage avec l'autre pièce de carrosserie (12, 13) qu'après ce positionnement, en au moins une autre étape d'assemblage par un mouvement additionnel dans la ou les direction(s) d'assemblage (26) avec reprise des tolérances.

2. Procédé selon la revendication 1, **caractérisé en ce que** l'on maintient les autres éléments assemblés (9, 10) hors de contact d'assemblage au cours de la première étape d'assemblage par déformation dans le sens opposé à la direction d'assemblage (26).

3. Procédé selon la revendication 1 ou 2, **caractérisé en ce que** le mouvement d'assemblage des pièces de carrosserie (3, 12, 13) est effectué dans la première étape d'assemblage par un mouvement d'approche d'un cadre de serrage (17) du dispositif de serrage (15), dans lequel la déformation et le mouvement d'assemblage lors de la deuxième étape d'assemblage sont effectués par un mouvement supplémentaire d'une ou de plusieurs unités de serrage (18), assurant un équilibrage et mues par un dispositif d'entraînement, à l'intérieur du cadre de serrage (17) selon un axe de réglage (20) correspondant à la direction d'assemblage (26).

4. Procédé selon la revendication 1, 2 ou 3, **caractérisé en ce que** les mouvements d'assemblage des pièces de carrosserie (3, 12, 13) sont effectués au moins avec une composante de direction dans la direction de l'axe z.

5. Système d'assemblage pour l'assemblage de pièces (3, 12, 13) d'une carrosserie de véhicule (2) au moyen d'un dispositif de serrage (15), dans lequel au moins une pièce de carrosserie (3) forme un module de construction composé de plusieurs éléments déjà assemblés les uns aux autres (5, 6, 7, 8, 9, 10) et le dispositif de serrage (15) comporte un ou plusieurs cadre(s) de serrage (17) avec des unités de serrage (18), qui serrent les pièces de carrosserie (3), **caractérisé en ce qu'**une ou plusieurs unité(s) de serrage (18) forment des unités d'équilibrage (19) mobiles et entraînées pour un mouvement supplémentaire des pièces de carrosserie serrées (3) selon au moins un axe de réglage (20).

6. Système d'assemblage selon la revendication 5, **caractérisé en ce que** les axes de réglage linéaires (20) des unités d'équilibrage (19) sont alignés en commun dans une direction.

7. Système d'assemblage selon la revendication 5 ou 6, **caractérisé en ce que** les axes de réglage (20) sont alignés en commun au moins avec une composante de direction dans la direction de la direction d'assemblage (26), de préférence dans la direction de l'axe z.

8. Système d'assemblage selon la revendication 5, 6 ou 7, **caractérisé en ce que** les unités d'équilibrage (19) sont associées à des colonnes verticales (8, 9, 10) de la carrosserie (3).

9. Système d'assemblage selon l'une quelconque des revendications 5 à 8, **caractérisé en ce que** les unités d'équilibrage (19) sont disposées à proximité de zones d'assemblage (14) de la carrosserie (3).

10. Système d'assemblage selon l'une quelconque des revendications 5 à 9, **caractérisé en ce que** les unités d'équilibrage (19) sont disposées dans la région de l'extrémité libre des colonnes verticales (8, 9, 10).

11. Système d'assemblage selon l'une quelconque des revendications 5 à 10, **caractérisé en ce que** le cadre de serrage (17) présente des parties de cadre rigides (23, 24) et une ou plusieurs parties de cadre (25) mobiles par rapport à celles-ci.

12. Système d'assemblage selon l'une quelconque des revendications 5 à 11, avec un profil de paroi latérale (4) d'une carrosserie de véhicule (2), se composant de plusieurs colonnes verticales (8, 9, 10) et de longerons (6) avec des zones d'assemblage (14) pour l'assemblage avec un module de fond (13), **caractérisé en ce que** les zones d'assemblage (14) sont alignées au moins avec une composante de direction dans la direction z, pour un mouvement de pose et d'assemblage.

13. Système d'assemblage selon la revendication 12, **caractérisé en ce que** la colonne A (8) est divisée, la partie inférieure étant formée par un module de compartiment moteur (12).

14. Système d'assemblage selon la revendication 12 ou 13, **caractérisé en ce qu'**au moins une colonne verticale (8, 9, 10) présente à son extrémité supérieure une forme d'équilibrage flexible (22).

15. Système d'assemblage selon la revendication 12, 13 ou 14, **caractérisé en ce que** les deux profils de paroi latérale (4) sont assemblés avec des traverses (5, 7) en une enceinte avec des zones d'assemblage (14) dans la direction z.
